# EUROPEAN PATENT SPECIFICATION

(11) **EP 3 373 879 B1**
(45) Date of publication and mention of the grant of the patent: **02.10.2019**
(21) Application number: 16808736.9
(22) Date of filing: 11.11.2016
(51) Int. Cl.: A61G 5/04

(54) **ATTACHMENT FOR A WHEELCHAIR**
BEFESTIGUNG FÜR EINEN ROLLSTUHL
FIXATION POUR FAUTEUIL ROULANT

(30) Priority: 11.11.2015 GB 201519918
(43) Date of publication of application: 19.09.2018
(73) Proprietor: Daniel, Kevin, Newquay, Cornwall TR7 1NX (GB)
(72) Inventor: Daniel, Kevin, Newquay, Cornwall TR7 1NX (GB)
(74) Representative: Dolleymores
(86) International application number: PCT/GB2016/053537
(87) International publication number: WO 2017/081475

(56) References cited:
- WO-A1-2004/021954
- GR-B- 1 006 063

## Description

According to the present disclosure, there is provided an attachment for providing powered movement to a manual wheelchair.

Powered attachments for wheelchairs, particularly fixed frame wheelchairs, are well known. To date, however, all arrangements have suffered from one or more significant drawbacks. Among these drawbacks have been: complex mechanisms for the attachment to wheelchairs and/or the need to attach portions of attachment mechanisms to wheelchairs at least semi-permanently, which adds weight/bulk to the wheelchair when in normal use; poor stability and performance of the attachments; and generally bulky/cumbersome design.

Prior art arrangements are known from GB 2124985 GR 1006063 and WO 2004/021954.

The present invention arose in a bid to provide an improved powered attachment for a wheelchair. In particular, an attachment having low bulk and weight, improved stability and performance, and a simple attachment mechanism allowing for attachment by a wheelchair user unaided and without the need for any attachment mechanism to be attached to the wheelchair during normal use (i.e. when detached from the attachment).

According to the present invention in a first aspect there is provided an attachment for a wheelchair as recited by Claim 1.

By such an arrangement, the attachment may be easily and effectively attached to a wheelchair by a user. Attachment is initiated simply by engaging the foot support with the hook.

Further, preferred, features are presented in the dependent claims.

According to the present invention in a further aspect, there is provided a method of attaching a wheelchair to an attachment as defined by Claim 14.

Non-limiting embodiments will now be described, by way of example only, with reference to the accompanying drawings, in which:
Figure 1 shows a lower perspective view of a wheelchair attached to an attachment according to a first embodiment; and

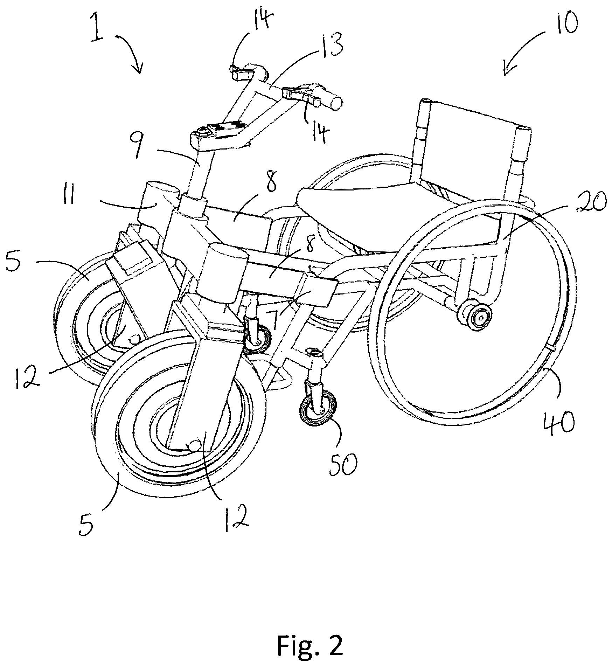

Figure 2 shows an upper perspective view of a wheelchair attached to the attachment of Figure 1.

With reference to the figures, there is shown an attachment 1 in accordance with a first arrangement attached to a wheelchair 10.

The wheelchair 10 comprises a conventional fixed frame wheelchair having a seat frame 20, which comprises a foot support 30. The foot support 30 comprises a tube (or other rigid elongate element, dependent on the specific frame design of the wheelchair) that extends substantially horizontal in use. During normal use of the wheelchair, a user will rest their feet on the foot support 30. The wheelchair 10 further comprises a set of rear wheels 40 and a smaller set of front wheels 50. During normal use, by manual movement of the rear wheels 40 a user may move the wheel chair along the ground, with the wheelchair rolling on the front and rear wheels 40, 50.

In broadest terms, the attachment 1 comprises a frame 2, which supports one or more electric motors (not shown), a battery 3, a steering mechanism 4, and one or more wheels 5 that are powered by the one or more electric motors and are steerable by the steering mechanism 4.

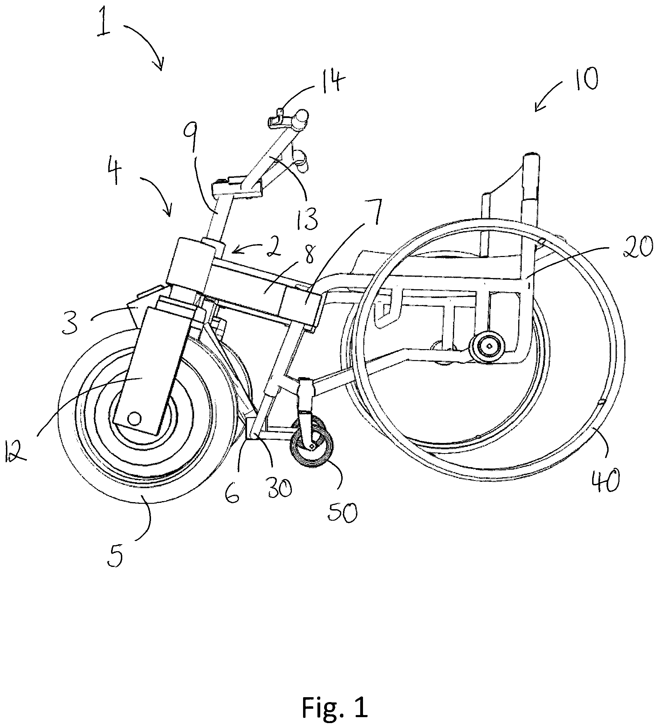

In the present arrangement, as is preferred, the attachment is provided with two wheels 5. By the provision of two wheels 5, the attachment 1 in combination with a wheelchair 10 effectively forms an electrically powered quad bike. Of course in arrangements in which the attachment 1 is provided with a single wheel 5, as is conceived within the scope of the present disclosure, the attachment in combination with a wheelchair 10 would effectively form an electrically powered trike. In the two-wheeled arrangement, as shown, the wheels 5 are spaced from one another in an axial direction. There is a hub mounted electric motor associated with each wheel 5. The wheels 5 are preferably spaced from one another in the axial direction by substantially the same distance as the rear wheels 40 of the wheelchair. The wheels 5 have a much larger diameter than the front wheels 50 of the wheelchair, which are spaced from the ground following attachment of the wheelchair 10 to the attachment 1, as seem most clearly in Figure 1. The wheels 5 preferably have a diameter of at least 30cm. The wheels 5 preferably have pneumatic tyres to allow for suitable use over rougher terrain. Also, each of the wheels 5 preferably comprises a plurality of rims and tyres that are joined together, or alternatively a unified hub with multiple tyres for each wheel. In the present arrangement each wheel 5 comprises three rims and tyres. The provision of multiple tyres per wheel allows for a low cost rugged arrangement and provides for the ability to continue running even when one or more of the tyres is punctured, which provides valuable peace of mind to a disabled user who may otherwise fear being stranded. Moreover, with a hub motor provided in each wheel, there is a backup motor in the event a motor fails, again providing peace of mind.

The dual hub motors can preferably perform with a variety of voltages and may, for example, perform with voltages of 24v, 36v, 48v or 60v. The motors can perform with or without electric (i.e. regenerative) brakes. Clearly, range may be improved by use of regenerative braking with charge provided to the batteries in a conventional manner. There will typically be provided, in addition or as an alternative, a disc brake attached to each motor (double disc brake system), wherein with multiple tyres on each wheel, as is preferred, the performance is very good under braking.

The attachment comprises a hook 6 for supporting the foot support of the wheelchair when the attachment and the wheelchair are attached to one another. The hook 6 is curved or angled upwardly for supporting the foot support from underneath in use. The hook 6 and the foot support that is supported thereby extend substantially parallel to an axis of the wheels of the attachment. The hook 6 may extend for substantially the entire length of the foot support 30 or may have a small dimension relative to the axial length of the foot support 30. There may be two or more hooks arranged side by side. The hook 6 may be unitarily formed by a curved or bent plate. There may be a suitable surface coating or layer applied to the hook 6 to grip/cushion the foot support 30. The foot support 30 is preferably not provided with any latching mechanism, rather relying on the curved or angled profile of the hook to engage the foot support 30, however, latching means could be provided in some arrangements. The hook 6 directly engages the foot support. In use, the hook support will support a vertical load of the wheelchair that has its front wheels lifted from the ground by a tilting back of the wheelchair 10.

The hook 6 forms part of an attachment mechanism, which further comprises an engagement means 7 that is engageable with the seat frame of the wheelchair at a point that is vertically spaced from the foot support in use, as clearly seen in the figures. The engagement means acts to lock the attachment to the wheelchair in use. In the present arrangement the engagement means comprises a pair of clamps. The clamps are preferably arranged to directly engage the seat frame. In the present arrangement, the clamps respectively engage substantially vertically extending tubular frame members that are provided on opposed sides of the foot support 30. The arrangement of the engagement means 7 may be varied in dependence on the seat frame of the wheelchair to which the attachment is to be fixed. Moreover, whilst simple clamps are preferred for ease of attachment, which clamps may take any suitable form, the engagement means may take any of a number of different forms, as will be appreciated by those skilled in the art. It is most preferred that whatever form the engagement means takes, no portion of the engagement means is left attached to the wheelchair during its normal use. The engagement means 7 is provided to prevent the detachment of the foot rest from the hook during use and further acts to set and fix the orientation/angle of the attachment relative to the wheelchair 10.

The attachment mechanism is such that the attachment of the wheelchair 10 to the attachment 1 is a simple operation that may be completed by the user of the wheelchair unaided. The attachment may be stored/transported/maintained in a substantially vertical orientation by leaning it against a wall or other vertical item or surface, or by use of an integrated stand (not shown). The hook 6 will be arranged to face the user's wheelchair at the time of attachment. For attachment, the user will wheel the wheelchair 10 up to the attachment and raise the foot support 30 of the wheelchair 10 by tipping the wheelchair backwards. The foot support 30 may then be placed on the foot support on an upper surface of the hook. By tipping the wheelchair forward following engagement, the wheelchair will apply a downward force to the hook through the foot support, with the hook ensuring engagement is maintained during this operation. The engagement means will be brought into engagement with the seat frame by the resultant pivotal movement of the attachment and may be fixed thereto (by clamping in the present arrangement) to lock the attachment to the wheelchair using the engagement means. The user may then under the power of the electric motor(s) proceed in the quad like vehicle that is thus formed. The attachment has a suitable braking arrangement, discussed below, and the brakes may be applied as appropriate to lock movement of the wheels of the attachment during the attachment operation.

The hook 6 projects rearwards of the wheels 5 of the attachment between the front wheels of the attachment, as seen in Figure 1. The hook 6 is fixed to the frame 2. The engagement means 7, which are also fixed to the frame are preferably provided rearwards of the hook 6, as best seen in Figure 1. Any frame configuration that allows for suitable positioning of these elements may be used. In the present arrangement, each of the clamps that define the engagement means 7 is provided on an arm 8 that projects at substantially 90 degrees to a steering column 9, discussed below. The arms are rigid. The arms could be replaced or re-configured. The arms may be foldable and lockable in a folded or extended position, which arrangement will aid with transportation and storage of the attachment 1.

The frame 2 comprises a cross member 11, which preferably extends substantially parallel in use. At each of the opposed ends of the cross member 11, there is provided a fork 12 for supporting one of the wheels 5 in a conventional manner. Again, the frame may be otherwise configured, as will be readily appreciated by those skilled in the art. The steering column 9 projects substantially vertically from the cross member in a central region thereof and terminates in a set of handlebars 13. A conventional throttle lever, switch or grip (not shown) and brake levers 14 are provided on the handlebars for suitable control of the motor speed. There will also be a switch provided for selecting forward or reverse drive of the motor(s). A suspension arrangement (not shown) is preferably provided for each of the forks 12 to allow for the independent vertical travel of the forks 12 and thereby the wheels 5. There is no requirement for suspension to be provided however and some arrangements will omit any suspension arrangement. The handlebars 13 are linked to the forks for turning them relative to the cross member 11 via a conventional steering mechanism, such as a rack and pinion arrangement. Any suitable steering mechanism may be implemented in dependence of the frame structure. The steering column/handle bars may be arranged such that they are unitarily removable to reduce the dimensions of the attachment for the purposes of transport or storage. With such removal, typical dimensions, which may vary depending on specific features/configurations may be 500x620x650mm.

A battery holder, which may support one, two or more batteries 3 is provided on the frame. With a single battery, costs and weight are reduced. However, with more than one battery there is a backup power source/increased operating range and improved charging time, since the batteries may be charged simultaneously using separate chargers. The batteries and /or holder are arranged to allow for charging of the batteries in situ, i.e. without the removal of the batteries from the attachment, which improves usability by a lone individual. In accordance with the present arrangement, it is preferable that the battery holder is arranged between the wheels 5. It may be arranged at an oblique angle in use, as shown. There may be a USB or similar power connector provided to allow the charging of a mobile device, the powering of lights or otherwise. There may be a cruise control system provided for maintaining a set speed.

The attachment as described herein offers a unique arrangement that may be easily attached/detached and transported. In particular, it is small enough to fit within the boot of most cars and is light enough to be lifted by an individual. It will preferably have a weight of less than 30kg.

Numerous alterations and modifications of the attachment 1 will be readily appreciated by those skilled within the art, within the scope of the claims that follow, and the application should be understood to encompass those modifications.

## Claims

1. An attachment (1) for a wheelchair (10) having a seat frame (20), including a foot support (30), the attachment (1) comprising:
a frame (2), which supports an electric motor, a battery (3) and a steering mechanism (4), and a wheel (5) that is powered by the electric motor and is steerable by the steering mechanism (4),
wherein the attachment (1) comprises a hook (6), wherein the attachment (1) further comprises an engagement means (7) for locking the attachment (1) to the wheelchair (10), the engagement means (7) engageable with the seat frame (20) of the wheelchair (10) at a point that is vertically spaced from the foot support (30) in use,
**characterised in that** the hook (6) is configured for directly engaging and supporting the foot support (30) of the wheelchair (10) when the attachment (1) and the wheelchair (10) are attached to one another.

2. An attachment as claimed in Claim 1, wherein the hook is curved or angled upwardly for supporting the foot support from underneath in use.

3. An attachment as claimed in Claim 1 or 2, wherein the engagement means comprises a clamp.

4. An attachment as claimed in any preceding claim, wherein the attachment comprises a pair of wheels.

5. An attachment as claimed in Claim 4, wherein, when the attachment and wheelchair are attached, the hook projects rearwards of the wheels of the attachment between the wheels of the attachment.

6. An attachment as claimed in Claim 4 or 5, wherein the battery is mounted between the wheels of the attachment.

7. An attachment as claimed in any of Claims 4 to 6, wherein the wheels of the attachment have a diameter of at least 30cm.

8. An attachment as claimed in any of Claims 4 to 7, wherein a hub motor is provided in each wheel.

9. An attachment as claimed in any of Claims 4 to 8, wherein each wheel comprises a plurality of rims and tyres provided next to one another along the wheel axis.

10. An attachment as claimed in any of Claims 4 to 9, wherein each of the wheels is supported by an independent suspension arrangement, so as to allow for independent vertical travel of the wheels of the attachment during use.

11. An attachment as claimed in any preceding claim, wherein the steering mechanism comprises a set of handlebars.

12. An attachment as claimed in any preceding claim in combination with a wheelchair.

13. A combination as claimed in Claim 12, wherein the wheelchair is a rigid framed wheelchair.

14. A method of attaching a wheelchair to an attachment as claimed in any preceding claim, comprising the steps of:
raising the foot support of the wheelchair by tipping the wheelchair backwards, and placing the foot support on an upper surface of the hook; and
pivoting the attachment towards the wheelchair by application of a downward force to the hook by the foot support.

15. A method as claimed in Claim 14, further comprising the step of locking the attachment to the wheelchair using the engagement means.

## Patentansprüche

1. Befestigung (1) für einen Rollstuhl (10) mit einem Sitzrahmen (20),der eine Fußstütze (30) einschließt, wobei die Befestigung (1) umfasst:
Einen Rahmen (2), der einen Elektromotor, a eine Batterie (3) und einen Lenkmechanismus (4) stützt, und ein Rad (5), das vom Elektromotor angetrieben wird und mittels des Lenkmechanismus (4) lenkbar ist,
wobei die Befestigung (1) einen Haken (6) umfasst,
wobei die Befestigung (1) ferner ein Kupplungsmittel (7) zum Verriegeln der Befestigung (1) mit dem Rollstuhl (10) umfasst, wobei sich das Kupplungsmittel (7) mit dem Sitzrahmen (20) des Rollstuhls (10) an einem Punkt in Eingriff bringen lässt, der im Einsatz vertikal von der Fußstütze (30) beabstandet ist,
**dadurch gekennzeichnet, dass** der Haken (6) für direktes Kuppeln und Unterstützen der Fußstütze (30) des Rollstuhls (10) konfiguriert ist, wenn die Befestigung (1) und der Rollstuhl (10) aneinander befestigt sind.

2. Befestigung wie in Anspruch 1 beansprucht, wobei der Haken nach oben gekrümmt oder abgewinkelt ist, um die Fußstütze im Einsatz von unten zu stützen.

3. Befestigung wie in Anspruch 1 oder 2 beansprucht, wobei das Kupplungsmittel eine Klammer umfasst.

4. Befestigung wie in einem vorhergehenden Anspruch beansprucht, wobei die Befestigung ein Paar von Rädern umfasst.

5. Befestigung wie in Anspruch 4 beansprucht, wobei, wenn die Befestigung und der Rollstuhl aneinander befestigt sind, der Haken rückwärts von den Rädern der Befestigung zwischen den Rädern der Befestigung hervorsteht.

6. Befestigung wie in Anspruch 4 oder 5 beansprucht, wobei die Batterie zwischen den Rädern der Befestigung montiert ist.

7. Befestigung wie in einem der Ansprüche 4 bis 6 beansprucht, wobei die Räder der Befestigung einen Durchmesser von zumindest 30 cm aufweisen.

8. Befestigung wie in einem der Ansprüche 4 bis 7 beansprucht, wobei ein Nabenmotor in jedem Rad montiert ist.

9. Befestigung nach einem der Ansprüche 4 bis 8 beansprucht, wobei jedes Rad eine Vielzahl von Felgen und Reifen umfasst, die nebeneinander entlang der Radachse bereitgestellt sind.

10. Befestigung wie in einem der Ansprüche 4 bis 9 beansprucht, wobei jedes der Räder durch eine Einzelradaufhängung gestützt ist, um unabhängige vertikale Bewegung der Räder der Befestigung im Einsatz zu erlauben.

11. Befestigung wie in einem vorhergehenden Anspruch beansprucht, wobei der Lenkmechanismus einen Lenker umfasst.

12. Befestigung wie in einem vorhergehenden Anspruch beansprucht in Kombination mit einem Rollstuhl.

13. Kombination wie in Anspruch 12 beansprucht, wobei der Rollstuhl mit starrem Rahmen ist.

14. Verfahren zum Befestigen eines Rollstuhls an eine Befestigung wie in einem vorhergehenden Anspruch beansprucht, folgende Schritte umfassend:
Anheben der Fußstütze des Rollstuhls durch Kippen des Rollstuhls nach hinten und
Platzieren der Fußstütze auf eine obere Fläche des Hakens; und
Schwenken der Befestigung in Richtung des Rollstuhls durch Anwendung einer abwärts gerichteten Kraft auf den Haken durch die Fußstütze.

15. Verfahren wie in Anspruch 14 beansprucht, das ferner den Schritt der Verriegelung der Befestigung mit dem Rollstuhl unter Verwendung des Kupplungsmittels umfasst.

## Revendications

1. Accessoire (1) pour un fauteuil roulant (10) muni d'un cadre de siège (20), y compris un repose-pied (30), l'accessoire (1) comprenant :
un bâti (2) supportant un moteur électrique, une batterie (3) et un mécanisme de direction(4), et une roue (5) entraînée par le moteur électrique et dirigeable par le mécanisme de direction(4),
l'accessoire (1) comprenant un crochet (6),
l'accessoire (1) comprenant en outre un dispositif d'accouplement (7) pour fixer l'accessoire (1) au fauteuil roulant (10), le dispositif d'accouplement (7) pouvant s'engager avec le cadre de siège (20) du fauteuil roulant (10) en un point espacé verticalement du repose-pied (30) en cours d'usage,
**caractérisé en ce que** le crochet (6) est configuré pour engager et supporter directement le repose-pied (30) du fauteuil roulant (10) lorsque l'accessoire (1) et le fauteuil roulant (10) sont fixés l'un à l'autre.

2. Accessoire selon la revendication 1, le crochet étant recourbé ou incliné vers le haut pour supporter le repose-pied du dessous par le bas en cours d'usage.

3. Accessoire selon la revendication 1 ou 2, le dispositif d'accouplement comprenant une fixation.

4. Accessoire selon une quelconque des revendications précédentes, l'accessoire comprenant une paire de roues.

5. Accessoire selon la revendication 4, dans lequel, lorsque l'accessoire et le fauteuil roulant sont fixés, le crochet fait saillie vers l'arrière des roues de l'accessoire, entre les roues de l'accessoire.

6. Accessoire selon la revendication 4 ou 5, la batterie étant montée entre les roues de l'accessoire.

7. Accessoire selon une quelconque des revendications 4 à 6, les roues de l'accessoire mesurant au moins 30 cm de diamètre.

8. Accessoire selon une quelconque des revendications 4 à 7, un moteur de moyeu étant installé dans chaque roue.

9. Accessoire selon une quelconque des revendications 4 à 8, chaque roue comprenant une pluralité de jantes et pneus placés l'un à côté de l'autre le long de l'essieu.

10. Accessoire selon une quelconque des revendications 4 à 9, chacune des roues étant supportée par un agencement à suspension indépendante, de façon à permettre une course indépendante des roues de l'accessoire en cours d'usage.

11. Accessoire selon une quelconque des revendications précédentes, le mécanisme de direction comprenant un jeu de guidons.

12. Accessoire selon une quelconque des revendications précédentes en combinaison avec un fauteuil roulant.

13. Combinaison selon la revendication 12, le fauteuil roulant étant un fauteuil roulant à cadre rigide.

14. Méthode de fixation d'un fauteuil roulant sur un accessoire selon une quelconque des revendications précédentes, comprenant les étapes suivantes :
soulèvement du repose-pied du fauteuil roulant en basculant le fauteuil roulant en arrière, et en plaçant le repose-pied sur une surface supérieure du crochet ; et
pivotement de l'accessoire vers le fauteuil roulant par l'application d'une force vers le bas sur le crochet par le repose-pied.

15. Méthode selon la revendication 14, comprenant en outre l'étape de verrouillage de l'accessoire sur le fauteuil roulant à l'aide du dispositif d'accouplement.
